# EUROPEAN PATENT SPECIFICATION

(11) **EP 1 632 279 B1**
(45) Date of publication and mention of the grant of the patent: **29.08.2007**
(21) Application number: 05255368.2
(22) Date of filing: 01.09.2005
(51) Int. Cl.: B01D 63/08, A61M 1/16, B01D 65/00, B01D 61/20

(54) **Port adapter for a tangetial flow filtration casette**
Anschlussadapter für eine Tangentialfiltrationscassette
Adaptateur pour la connexion d'une cassette de filtration tangentielle

(30) Priority: 02.09.2004 US 606762 P
(43) Date of publication of application: 08.03.2006
(73) Proprietor: MILLIPORE CORPORATION, Billerica Massachusetts 01821 (US)
(72) Inventor: Pesakovich, Boris, Brookline Massachusetts 02445 (US); McInerney, Kevin, Chelmsford Massachusetts 01824 (US)
(74) Representative: Gambell, Derek

(56) References cited:
- EP-A- 0 784 988
- US-A- 3 783 107
- US-A- 4 451 370
- US-A- 4 849 102
- US-B1- 6 312 591

## Description

### Background

The filtration of a liquid sample by a membrane for purposes of purification (*e.g*., by removal of particulate or molecular contaminants) or concentration (*e.g*., for laboratory analysis) is a well developed art. Toward such ends, the flow of the liquid sample relative to the membrane's surface can in many instances be meaningfully characterized as either essentially parallel *(i.e.,* tangential flow) or essentially normal *(i.e.,* normal flow).

In tangential flow filtration (TFF), a large fraction of the liquid sample flows continuously, over time, in a direction essentially parallel to the membrane surface, as opposed to a much smaller portion which flows through the membrane. Because of the sweeping, cleansing nature of such flow -- which discourages premature clogging, fouling, and concentration polarization -- tangential flow filtration can often attain higher fluxes and higher throughputs than corresponding normal flow filtration. Because of these and other advantages, TFF systems are often pivotally employed for filtration in drug manufacturing processes.

Tangential flow filtration systems are commercially available to drug manufacturers in several scales and for a variety of applications. Larger scale TFF processes, often involving several liters of fluid, in general employ filter assemblies having a total membrane area in the order of several hundreds or thousands of square centimeters, distributed among stacks of several membrane-bearing filter plates. Smaller scale TFF processes, often involving milliliters of fluid, typically employ filter cassettes having a total membrane area of only a few square centimeters.

Smaller scale TFF processes are generally employed in laboratory settings, for example, during the research and development stages of drug manufacture, wherein sample fluids are often in scarce supply, and best conserved.

There is currently interest in offering to drug manufacturers a larger family of small scale TFF cassette products with more varied volume ratings than currently available, thereby providing greater flexibility and/or applicability in the design of lab-scale filtration protocols. Unfortunately, many currently available TFF cassettes -- though they themselves are comparatively inexpensive and disposable -- need to be used in dedicated precision-engineered filter holders to achieve their optimum filtration capabilities. Hence, even though one can develop a new TFF cassette that "fits" within a pre-existing filter holder, optimum filtration is unlikely because the particular design of the new TFF cassette would not have influenced the engineering of the filter holder. The development and adoption of new TFF cassettes is thus frustrated by a pervasively perceived requirement that a matching dedicated filter holder also be jointly developed and adopted.

United States patent US 3 783 107 (Kohlmuller) describes that a filter-press type water depletion unit. The depletion unit has a diaphragm member having a rim portion that is gas-tight and impervious to electrolyte, A holding arrangement presses the rim portion at its lateral surfaces for sealing the gas space and the electrolyte space and the rim portion is provided with respective passages communicating with the gas space and the eletrolyte space.

United States patent US 6 312 591 (Sartorius GmbH) describes that a filtration cell for carrying out a tangential flow filtration of a sample liquid contains at least two blocks and at least two filtration elements arranged between each pair of two adjacent blocks. The filtration elements each include an outlet for filtrate, a sheet of support material and two generally flat ultrafiltration or microfiltration membranes, arranged on either side of the support material in a sandwich construction. Each of the blocks, at a side adjacent the membranes, is provided with a respective channel for feeding a flow of sample liquid tangentially over the membranes such that each channel is connected in parallel with the inlet for the flow of sample liquid to be filtered and with an outlet for a concentrated solution. Each channel includes in its longitudinal direction a number of subsequent channel sections separate by transitional zones and is constructed and arranged such that the main flow direction in subsequent sections changes abruptly in the transitional zones.

United States patent US 4 849 102 (Filtron Technology Corp.) discloses a pair of membrane ultrafiltration cells which are mounted one on each of the front and back surfaces of a central bidirectional manifold having an exit and an entrance conduit connector on the same side wall of the manifold. The manifold takes fluid to be filtered from a source through a conduit connector for full flow delivery to each filter cell and collects filtered fluid from each cell to be dispensed through a further connector. Plural manifolds may be connected to each other in a filter system for greatly increased filtering capacity.

### Summary

Essential and optional features of the present invention are set out in the accompanying main- and subclaims respectively.

The present invention is directed in general to tangential flow filtration assemblies for conducting ultrafiltration, and in particular, to tangential flow filtration assemblies that incorporate means for reducing sample "hold-up" volume.

In response to the above need, the present invention provides a tangential flow filtration assembly, which -- by the combined utilization of an ultrafiltration TFF cassette and at least one hollow elongate port adapter -- enables optimized low sample volume ultrafiltration. This optimized filtration is accomplished despite the utilization also of a pre-existing filter holder originally engineered for higher sample volume ultrafiltration.

The tangential flow filtration assembly, in general, comprises the filter holder, the TFF cassette, and the hollow elongate port adapter.

The filter holder comprises a pair of compression manifolds 50a, 50b with at least one of said compression manifolds 50a having an outer surface 57, an inner surface 58, and a port 54 leading to a fluid pathway 52 from said outer surface 57 to said inner surface 58.

The TFF cassette is functionally engaged between the compression manifolds 50a, 50b, and comprises a housing enclosing a single filter plate. The single filter plate itself comprises an ultrafiltration membrane disposed within a substantially planar framework.

The hollow elongate port adapter 10 has an engagement side and an insertion side, with a flange 14 disposed therebetween, and an elastomeric sealing element 16 disposed in said insertion side. The hollow elongate port adapter is inserted through said port 54 into said fluid pathway 52 such that, (i) the furthest end of the insertion side is flush with or slightly recessed under the inner surface 58 of the compression manifold 50a, (ii) the flange 14 is seated on said port 54, and (iii) the elastomeric sealing element 16 forms a substantially aseptic water-tight seal within the fluid pathway 52. Said post and said flange are fixedly engaged with a clamp (60).

The present invention can be embodied as said tangential flow filtration assembly, or as a tangential flow filtration kit, or as a tangential flow filtration methodology. The inventive tangential flow filtration kit is characterized in general by the inclusion of pre-matched TFF cassette and port adapter components. The inventive tangential flow filtration methodology is characterized by the use of the inventive port adapter to accomplish tangential flow ultrafiltration with comparatively low "hold-up" volume.

In light of the above, it is a principal object of the present invention to provide means for conducting tangential flow ultrafiltration, utilizing a low-volume ultrafiltration TFF cassette, with minimized "hold-up" volume.

It is another object of the present invention to provide a tangential flow filtration assembly comprising a filter holder, a TFF cassette, and at least one hollow elongate port adapter.

It is another object of the present invention to provide a tangential flow filtration kit comprising matching TFF cassette and port adapter components.

It is another object of the present invention to provide a tangential flow filtration methodology having minimized sample "hold-up" volume.

Other features and advantages of this invention will become apparent from the following detailed description of representative embodiments of the invention, taken in conjunction with the accompanying drawings.

### Brief Description of the Drawings

Fig. 1A illustrates schematically in cross section a hollow elongate port adapter 10 inserted into the bore 52 of a port 54 provided on a filter holder 50, according to an embodiment of a present invention.
Fig. 1B illustrates schematically in cross section another hollow elongate port adapter 10 inserted into the bore 52 of a port 54 provided on a filter holder 50, according to another embodiment of the present invention.
Fig. 2A illustrates a particular configuration of the hollow elongate port adapter 10 illustrated in Fig. 1A.
Fig. 2B illustrates a particular configuration of the hollow elongate port adapter 10 illustrated in Fig. 1 B.
Fig. 3 illustrates a tangential flow filter assembly, according to an embodiment of the present invention, comprising a TFF cassette 80 functionally engaged within a filter holder (50a, 50b) with hollow elongate port adapters 10 inserted into the bores 52 of the holder's ports 54.
Figure 4A illustrates schematically a TFF cassette 80.
Figure 4B illustrates schematically a "parallel" fluid flow path through two stacked TFF cassettes 80a and 80b.
Figure 4C illustrates schematically a "serial" fluid flow path through two stacked TFF cassettes 80a and 80b.

### Detailed Description

The present invention in general provides means for conducting low volume TTF ultrafiltration, the means being particularly characterized by the cost-effective utilization of preexisting TFF filter holder hardware, while providing a flow path having appropriately minimized "hold-up" volume. Central to the invention is custom configured hollow elongate port adapter 10.

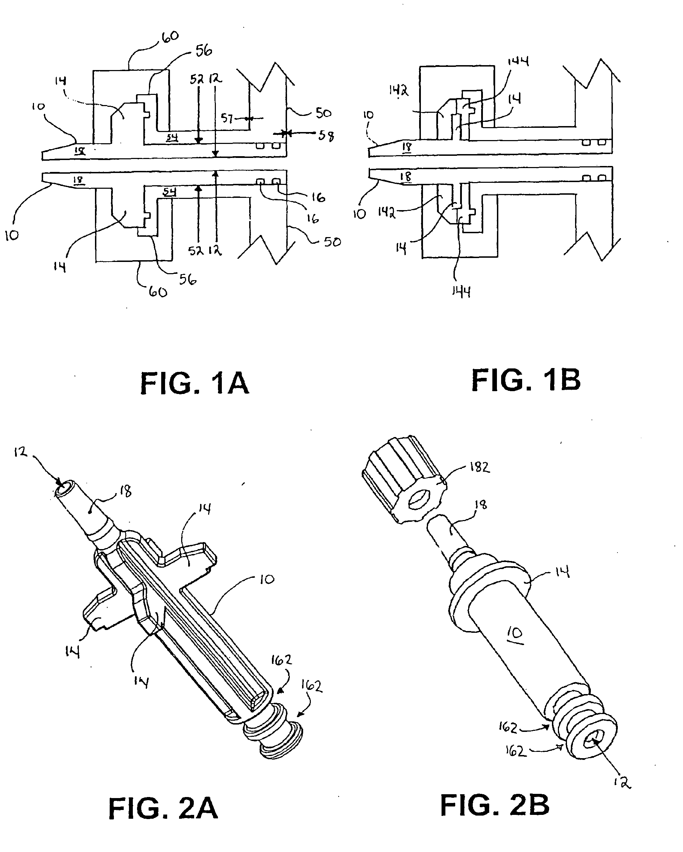

The hollow elongate port adapter 10 is custom-configured to enable low volume tangential flow filtration utilizing pre-existing filter holders originally designed for higher volume tangential flow filtration. Such filter holders typically comprises a pair of compression manifolds 50a, 50b disposed to functionally engage a TFF cassette therebetween. In such filter holders, one of said compression manifolds 50a (typically, both) will be provided with at least one port 54 (typically several) leading to a fluid pathway from said outer surface 57 to said inner surface 58. In the embodiments of Figs. 1A and 1B, said fluid pathway is provided by port bore 52.

In respect of its basic structure, the hollow elongate port adapter 10 -- as shown in Figs. 1A, 1 B, 2A, and 2B -- has an engagement side and an insertion side, with a flange 14 disposed therebetween, and an elastomeric sealing element 16 disposed in said insertion side.

More particularly, the hollow elongate port adapter is structured in close consideration of said pre-existing filter holder to enable water-tight insertion thereof through said port 54 into said fluid pathway, and such that, when inserted, (i) the furthest end of said insertion side is flush with or slightly recessed under said inner surface 58 of said compression manifold 50a, (ii) said flange 14 is seated on said port 54, and (iii) said elastomeric sealing element 16 forms a substantially aseptic water-tight seal within said fluid pathway 52.

The port adapter as illustrated in the Figures is hollow through its entire length. In other words, a substantially co-axial fluid-accessible bore 12 runs from the adapter's engagement side to its insertion side. The diameter of the adapter's bore 12 is set to enable adequate flow of fluids within standard ultrafiltration operating parameters, i.e., a flow rate in the range of 40 to 150 ml/min and a maximum transmembrane pressure of 50 psi (3.45 bar). The preferred adapter bore diameter is a value sufficient to reduce the port bore volume by up to 85%. The substantially reduced diameter of the adapter bore 12, in comparison to a non-adapted port diameter 52, yields reduced hold-up volume, and hence, a level of fluid conservation beneficial or otherwise appropriate for lower volume ultrafiltration.

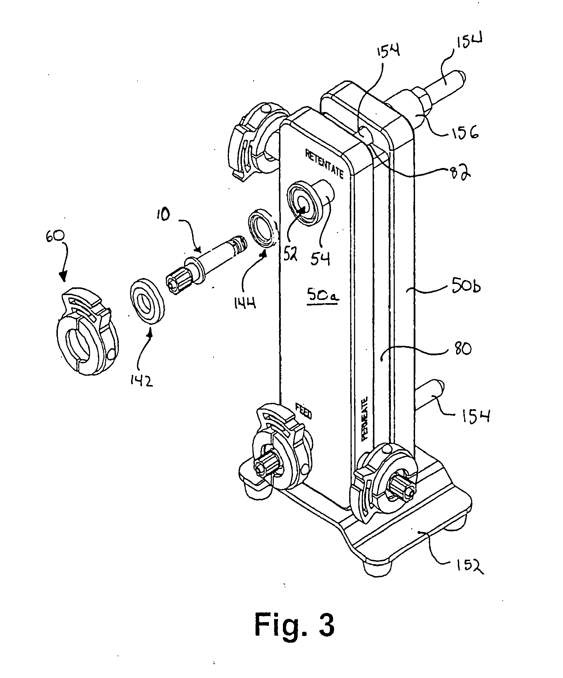

The basic structural design of typical or otherwise useful TFF filter holders is represented by (but not limited to) the holder illustrated in Fig. 3. As shown therein, the filter holder comprises a pair of compression manifolds 50a and 50b slidably engageable to hold a filter cassette 80 therein. Compression manifold 50a is fixedly mounted on base 152 and is provided with posts 54 for engaging the opposing compression manifold 50b. Feed, retentate, and permeate ports are provided, each typically being structured in the manner of port 54. The exact location (*i.e.*, on plates 50a or 50b) of these and other ports (e.g., a "waste" port) will vary among different filter holder designs, depending on the flow path configuration of TFF assembly.

To functionally engage a TFF cassette within the TFF holder, the TFF cassette is first brought into face to face registration with the inner surface 51 of compression manifold 50a such that its ports are in register with the ports of plate 50a. As shown illustratively in Fig. 3, registration can be facilitated by the providing an alignment groove 82 on the TFF cassette 80 that meets with and engages onto posts 154. Once registration is accomplished, the backing compression manifold 50b is inserted into posts 153 and then firmly slid back into the TFF cassette, also registering any back end ports provided on cassette 80. A locking nut 156, disposed on the posts 154, is utilized to secure and/or tighten the compression manifolds against the cassette to yield substantially water tight seals at all points of registration.

As indicated, the hollow elongate port adapter 10 should be inserted into the a filter holder port such that the furthest end of its insertion side is either flush or slightly recessed from the holder's inside surface 51. Being completely flush with the inside surface is preferred, but ease of manufacture and use suggests purposely designing it to accommodate a slight recess, *i.e.*, a recess that results in nominal or otherwise acceptable hold-up volume, thereby limiting the extent to which the inner bore of port needs to be washed after a TFF operation. Designing the port adapter 10 to present a completely flush surface is difficult and risks protrusion of the port adapter into the TFF cassette 80, potentially interfering with the filtration process and/or abutting up and damaging against the membrane component housed therein.

The flange of the port adapter 10 is structured to engage the filter holder port 54 to constrain lateral displacement of the port adapter relative to said filter holder port 54. Once seated in the port, a clamp 60 is used around the flange and port to secure the hollow elongate port adapter 10. Lateral displacement, both inwardly and outwardly, should be prevented. Preventing inward displacement assures, for example, that the hollow elongate port adapter 10 will not undesirably protrude and damage a membrane component when, for example, force is used to attach a hose to the engagement side of the port adapter. Preventing outward displacement assures, among other things, that the hollow elongate port adapter 10 is not ejected from the port bore due to the elevated fluid pressures often encountered in TFF operation.

The structure of the flange is subject to broad variation. Two illustrative examples are presented in Figures 1A/2A and Figures 2A/2B.

As shown in Figs. 1A and 2A, flange 14 comprises a plurality of fins that collectively fit tightly within or otherwise approximate the internal space created when a clamp 60 is engaged appropriately onto the port seat 56. The flange 14 is essentially formed monolithically as part of the predominant bulk of the hollow elongate port assembly 10.

The embodiment shown in Figure 2A utilizes a strong, yet structurally economical configuration that -- among other things -- reduces product bulk, imparts better structural rigidity, and minimizes shrinkage defects that often accompany the casting of more voluminous bulky structures. If these are not key concerns, however, the invention may utilize more solid form-filling configurations, e.g., without carve-outs and cutaways. Such configurations are often easier to cast.

In contrast with the flange embodiments of Figs. 1A and 2A, the flange component in the hollow elongate port adapter 10 of Figs. 1 B and 2B comprises inner flange 14, encased within the cooperating halves 142 and 144 that form -- when assembled -- an outer flange covering. Like the single piece embodiment, the fully assembled flange 14, 142, and 144 will fit tightly within or otherwise approximate the internal space created by a clamp 60 engaged appropriately onto the port seat 56.

Whether one uses the single-piece or multi-piece flange, or some other configuration, is left to those skilled in the art. Briefly, however, the single piece configuration requires less components, whereas the multi-piece configuration is responsive to certain commercially-available TFF holders that are typically already provided with the gasket-like outer flange elements 142 and 144, and which thereby provide when assembled an additional water tight seal proximate the engagement side of the hollow elongate port adapter 10.

The elastomeric sealing element 16 disposed on the insertion side of the hollow elongate port adapter 10 can vary in respect of structure, location, and number; provided that the basic functionality (i.e., providing a substantially aseptic water tight seal) is accomplished. In the preferred embodiment, the elastomeric sealing element comprise two o-rings disposed in annular groves 162 proximate the furthest end of the adapter's elongate side. The o-rings are configured of materials with elasticity and dimensions selected to enable sufficiently easy insertion of the hollow elongate port adapter 10 into port bore 52, yet press upon the bore wall at sufficient force to withstand the hydraulic pressures accompanying tangential flow ultrafiltration, thereby providing said "substantially aseptic water tight seal".

The further away the o-rings are positioned from the far end of the adapter, the greater the length of port bore 52 that fluid can creep into the holder port 54. Prior to reuse of a filter holder for a subsequent TFF run, such length would have to be cleaned. Hence, preferred configuration should attempt to place the o-rings at the furthest practical end. The use of the two o-rings (as shown in the Figures), rather than a single o-ring, is not essential for the operability of the adapter. However, the additional o-ring provides further assurance against leakage of fluid through the port via the adapter, a situation which in certain applications is of at least equal importance as that of managing "hold up" volume.

Elastomeric material useful for the manufacture of the o-rings include, but are not limited to, nitrile-based rubbers, such as Buna-N; VITON (a fluoropolymer available from E.I. du Pont de Nemours, Wilmington, Delaware); ethylene propylene rubber, AFLAS (a copolymer of tetrafluoroethylene and propylene available from Asahi Glass, Tokyo, Japan); silicone; TEFLON; polytetrafluoroethylene; TEFLON-encapsulated VITON; and neoprene.

The engagement side of the hollow elongate port adapter is preferably configured with means for attaching fluid conduits (e.g., hoses, pipes, and the like). The preferred configuration is the well known "luer"-type connector arrangement comprising luer slip 18 and matching luer lock 182 (shown in Fig. 2B). A hose or other fitting (fitted with the appropriate matching "female" connector means) is slipped onto luer slip 18, and locked into place utilizing luer lock 182. Other connector means -- aside from the luer arrangement -- can be utilized, for example, the use of a barbed nozzle (for friction fitted conduit connection) or syringes-based connectors. Inasmuch as the hollow port adapter is intended for "single-use" disposability, preferred configuration are those can be manufactured easily and at little cost, yet provide a good aseptic connection. A luer-type arrangement is felt to provide the best balance of these factors.

In respect of materials and methods, the hollow elongate port adapter - excepting the components assembled thereto (e.g., o-rings, luer lock) -- will generally be formed monolithically *(i.e.,* as a single, homogenous, unitary, unassembled piece) from polymeric material, for example, by well-known injection molding or like processes. Selection of polymeric materials should be made in consideration of compatibility with pharmaceutical application and the objective of "single-use disposability". Examples of suitable polymeric material include, but are not limited to, polycarbonates, polyesters, nylons, PTFE resins and other fluoropolymers, acrylic and methacrylic resins and copolymers, polysulphones, polyethersulphones, polyaryl-sulphones, polystryenes, polyvinyl chlorides, chlorinated polyvinyl chlorides, ABS and its alloys and blends, polyurethanes, thermoset polymers, polyolefins (e.g., low density polyethylene, high density polyethylene, and ultrahigh molecular weight polyethylene and copolymers thereof), polypropylene and copolymers thereof, and metallocene generated polyolefins. Preferred polymers are polyolefins, in particular polyethylenes and their copolymers, polystyrenes, and polycarbonates.

In its preferred embodiment, the present invention is provided as a tangential flow filtration kit custom-configured for use with a pre-existing filter holder to enable tangential flow filtration. The pre-existing filter holder comprises a pair of compression manifolds 50a, 50b disposed to functionally engage a TFF cassette therebetween with one of said compression manifolds 50a having an outer surface 57, an inner surface 58, and a port 54 leading to a fluid pathway 52 from said outer surface 57 to said inner surface 58.

The tangential flow filtration kit should containing enclosed within a common package: (a) at least one said TFF cassette 80, the TFF cassette comprising a housing enclosing a single filter plate, said filter plate comprising a membrane disposed within a substantially planar framework; (b) a hollow elongate port adapter 10 having an engagement side and an insertion side with a flange 14 disposed therebetween and an elastomeric sealing element 16 disposed in said insertion side, the hollow elongate port adapter being configured for water-tight insertion through said port 54 into said fluid pathway 52 such that, when inserted, (i) the furthest end of said insertion side is flush with or slightly recessed under said inner surface 58 of said compression manifold 50a, (ii) said flange 14 is seated on said port 54, and (iii) said elastomeric sealing element 16 forms a substantially aseptic water-tight seal within said fluid pathway 52 said kit further comprising a clamp.

Other optional kit components include, for example, a disposable ring clamp 60, fluid conduits, disposable fluid sample bags, etc. For certain kit applications, the components can be, if desired, individually wrapped and/or pre-sterilized.

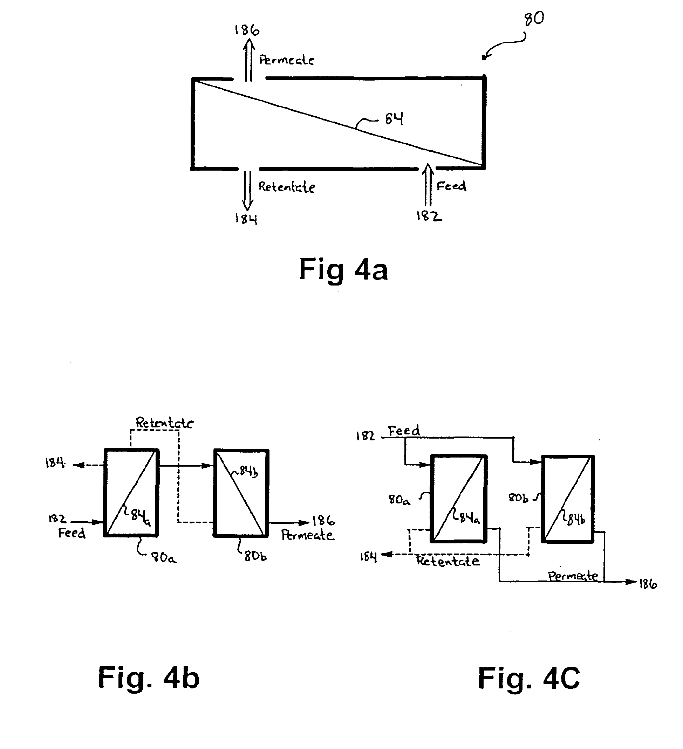

In respect of TFF cassette 80, general structures and configurations therefor are well known. Basically however -- as shown schematically in Fig. 4A -- a TFF cassette 80 will comprise a feed inlet 182, retentate outlet 184, and permeate outlet 186, and a single ultrafiltration membrane-bearing filter plate 84. Suitable ultrafiltration membranes can be formed from polyvinylidene fluoride (PVDF), polysulfone, polyethersulfone, polyarylsulfone, regenerated cellulose, polyamide, polypropylene, polyethylene, polytetrafluoroethylene, cellulose acetate, polyacrylonitrile, vinyl copolymer, polyamides (such as "Nylon 6" or Nylon 66") polycarbonate, PFA, blends thereof or the like.

More detailed TFF cassette configurations are described and/or disclosed, for example, in the patent literature: *See e.g.,* U.S. Pat. No. 6,054,051, issued to R.D. van Reis on April 25, 2000; 4,761,230, issued to J.F. Pacheco et al. on August 2, 1988; 5,096,582, issued to A.A. Lombardi et al. on March 17, 1992; 5,256,294, issued to R.D. van Reis on October 26, 1993; and U.S. Pat. No. 5,525,144, issued to A.Z. Gollan on June 11, 1996. TFF cassettes are also available commercially: *E.g.*, "Pellicon XL" and "Pellicon 2" TFF cartridges (available from Millipore Corporation of Bedford, Massachusetts 01730); and "Centramate", "Centrasette", "Maximate" and "Maximate-Ext" TFF cartridges (available from Pall Corporation of East Hills, New York 11548).

For the present invention, the preferred tangential flow filtration modules are commercially-available TFF cassettes that include only a single plate bearing a single sheet of ultrafiltration material, particularly when such commercially-available TFF cassettes belong to a "linearly-scaled" family *(i.e.,* having linearly constant filtration parameter ratios throughout it member product range) of TFF cassettes, for example, the Millipore "Pellicon" family of TFF cassettes.

Although the use of a single ultrafiltration TFF cassette is the preferred mode of practice, certain application may employ two or more of said cassettes (see e.g., TFF cassettes 80a and 80b in Figs. 4B and 4C), arranged to provide either a "serial" flow fluid pathway *(see e.g.,* Fig. 4B) or -- more likely -- a "parallel" flow fluid pathway (see e.g., Fig. 4C). As known to those skilled in the art, these pathways are created by a combination of the orientation and/or facing of the TFF cassette 80 and the system of internal and external fluid channels and ports provided in the cassette's housing and/or enclosed membrane plate 84.

The tangential flow filtration method of the present invention, characterized by its accomplishment of good ultrafiltration with low hold-up volume, commences with the provision of a a filter holder, a TFF cassette 80, and applicant's hollow elongate port adapter 10.

These kits components are essentially provided as hereinabove described. Thus, the filter holder should at the least comprise a pair of compression manifolds 50a, 50b disposed to functionally engage a TFF cassette, wherein one of said manifolds has an outer surface 57, an inner surface 58, and a port 54 leading to a fluid pathway 52 from said outer surface 57 to said inner surface 58. Likewise, the TFF cassette 80 should comprise at the least a housing enclosing membrane material. And, the hollow elongate port adapter 10 should at the least have an engagement side and an insertion side with a flange 14 disposed therebetween, with an elastomeric sealing element 16 disposed in said insertion side.

The TFF cassette is functionally engaged between the compression manifolds 50a, 50b, and the hollow elongate port adapter 10 inserted into said fluid pathway 52, such that: (i) the furthest end of said insertion side is flush with or slightly recessed under said inner surface 58 of said compression manifold 50a, (ii) said flange 14 is seated on said port 54, and (iii) said elastomeric sealing element 16 forms a substantially aseptic water-tight seal within said fluid pathway 52. If there is more than one active port on the filter holder, a hollow elongate port adapter 10 is inserted into each. Said flange and said port are fixedly engaged with a clamp.

Once the TFF cassette 10 is functionally engaged, and all active ports are fitted with adapters, sample fluid can be urged or otherwise flows into said TFF cassette 80 through said hollow elongate port adapter 10 according to any desired pre-planned ultrafiltration protocol. This final step can involve, for example, the connection of appropriate fluid conduits, sample reservoirs, collection vessels, pumps, valves, and sensors to the adapted TFF Filter assembly; the conduct of pre- and/or post- run membrane integrity tests; and the conduct of pre-run steam sterilization.

## Claims

1. A tangential flow filtration (TFF) assembly useful for low volume ultrafiltration comprising:
(a) a filter holder comprising a pair of compression manifolds (50a,50b) disposed to functionally engage a TFF cassette (80) therebetween with at least one of said compression manifolds having an outer surface (57), an inner surface (58) and a port (54) leading to a fluid pathway from said outer surface to said inner surface;
(b) at least one said TFF cassette functionally engaged between said compression manifolds, the TFF cassette comprising a housing enclosing a single filter plate, said single filter plate comprising an ultrafiltration membrane disposed within a substantially planar framework; and
(c) a hollow elongate port adapter (10) having an engagement side and an insertion side with a flange (14) disposed therebetween and an elastomeric sealing element (16) disposed in said insertion side, the hollow elongate port adapter inserted through said port into said fluid pathway such that,
(i) the furthest end of said insertion side is flush with or recessed under said inner surface of said compression manifold,
(ii) said flange is seated on said port, and
(iii) said elastomeric sealing element forms a substantially aseptic water-tight seal within said fluid pathway, and
(d) a clamp (60) capable, when said hollow elongate port adapter is inserted into said fluid pathway, of fixedly engaging said flange and said port.

2. A tangential flow filtration kit custom-configured for use with a pre-existing filter holder to enable tangential flow filtration, wherein said pre-existing filter holder comprises a pair of compression manifolds disposed to functionally engage a TFF cassette therebetween with at least one of said compression manifolds having an outer surface, an Inner surface, and a port leading to a fluid pathway from said outer surface to said inner surface, the tangential flow filtration kit containing enclosed within a common package;
(a) at least one said TFF cassette (80);
(b) a hollow elongate port adapter (10) insertable into said port in said compression manifold and having an engagement side and an insertion side with a flange (14) disposed therebetween and an elastomeric sealing element (16) disposed in said insertion side, the hollow elongate port adapter being configured for substantially water-tight insertion through said port into said fluid pathway such that, when inserted,
(i) the furthest end of said insertion side is suitable for lying flush with or recessed under said inner surface of said compression manifold,
(ii) said flange is suitable for being seated on said port, and
(iii) said elastomeric sealing element is suitable for forming a substantially aseptic water-tight seal within said fluid pathway, and
(c) a clamp (60) capable, when said hollow elongate port adapter is inserted into said fluid pathway, of fixedly engaging said flange and said port.

3. The tangential flow filtration kit of claim **2,** wherein the TFF cassette and the hollow elongate port adapter are pre-sterilized.

4. The tangential flow filtration kit of claim 2, wherein the hollow port adapter is structurally configured to reduce by up to 85% the internal volume of said port.

5. A tangential flow filtration method comprising the steps of:
(a) providing a filter holder, said filter holder having a pair of compression manifolds (50a,50b) disposed to functionally engage a TFF cassette therebetween with one of said compression manifolds having an outer surface, an inner surface, and a port leading to a fluid pathway from said outer surface to said inner surface;
(b) providing one said TFF cassette (80), the TFF cassette comprising a housing enclosing a single filter plate, said filter plate comprising a membrane disposed within a substantially planar framework;
(c) providing a hollow elongate port adapter (10), the hollow elongate port adapter having an engagement side and an insertion side with a flange (14) disposed therebetween and an elastomeric sealing element (16) disposed in said insertion side;
(d) engaging said TFF cassette between said pair of compression manifolds;
(e) inserting said hollow elongate port adapter into said fluid pathway such that (i) the furthest end of said insertion side is flush with or recessed under said inner surface of said compression manifold, (II) said flange is seated on said port, and (iii) said elastomeric sealing element forms a substantially aseptic water-tight seal within said fluid pathway;
(f) fixedly engaging said flange and said port with a clamp (60); and
(g) urging a sample fluid into said TFF cassette and through said hollow elongate port adapter.

6. The tangential flow filtration method of claims 5, wherein said TFF cassette has an internal fluid volume of about 2 ml.

7. The tangential flow filtration method of claim 5, wherein said membrane is an ultrafiltration membrane having an nominal molecular weight limit -(NMWL) of approximately 1 to approximately 1000 kD.

8. The tangential flow filtration method of claim 5, wherein sample fluid flows into said TFF cassette at a flow rate in the range of 40 to 150 ml/min and a maximum transmembrane pressure of 50 psi (3.45 bar).

## Patentansprüche

1. Tangentialströmungs-Filtrationsanordnung (TFF-Anordnung), die zur Ultrafiltration mit niedrigem Volumen nutzbar ist, mit:
(a) einem Filterhalter mit einem Paar von Kompressionsverteilern (50a, 50b), die angeordnet sind, um eine TFF-Kassette (80) dazwischen mit mindestens einem der Kompressionsverteiler funktionsmäßig in Eingriff zu nehmen, die eine äußere Oberfläche (57), eine innere Oberfläche (58) und eine Öffnung (54), die zu einer Fluidbahn von der äußeren Oberfläche zu der inneren Oberfläche führt, umfasst;
(b) mindestens einer besagten TFF-Kassette, die funktionsmäßig zwischen den Kompressionsverteilern in Eingriff genommen ist, wobei die TFF-Kassette ein Gehäuse umfasst, das eine einzelne Filterplatte umschließt, wobei die einzelne Filterplatte eine Ultrafiltrationsmembran umfasst, die in einem im Wesentlichen planaren Rahmen angeordnet ist; und
(c) einem hohlen länglichen Öffnungsadapter (10), der eine Ineingriffnahmeseite und ein Einfügungsseite aufweist, wobei ein Flansch (14) dazwischen und ein elastomeres Dichtungselement (16) in der Einfügungsseite angeordnet ist, wobei der hohle längliche Öffnungsadapter durch die Öffnung in die Fluidbahn eingefügt wird, sodass
(i) das entfernteste Ende der Einfügungsseite bündig mit oder ausgenommen unter der inneren Oberfläche des Kompressionsverteilers ist,
(ii) der Flansch an der Öffnung sitzt, und
(iii) das elastomere Dichtungselement eine im Wesentlichen aseptische wasserdichte Dichtung innerhalb der Fluidbahn bildet, und
(d) einer Klammer (60), die im Stande ist, wenn der hohle längliche Öffnungsadapter in die Fluidbahn eingefügt wird, den Flansch und die Öffnung fest in Eingriff zu nehmen.

2. Tangentialströmungs-Filtrations-Kit, der zum Gebrauch mit einem vorher existierenden Filterhalter kundenspezifisch konfiguriert ist, um Tangentialströmungs-Filtration zu ermöglichen, wobei der vorher existierende Filterhalter ein Paar von Kompressionsverteilern umfasst, die angeordnet sind, um eine TFF-Kassette funktionsmäßig dazwischen in Eingriff zu nehmen, wobei mindestens einer der Kompressionsverteiler eine äußere Oberfläche, eine innere Oberfläche und eine Öffnung aufweist, die zu einer Fluidbahn von der äußeren Oberfläche zu der inneren Oberfläche führt, wobei der Tangentialströmungs-Filtrations-Kit in einem üblichen Paket beigefügt enthält:
(a) mindestens eine der TFF-Kassetten (80);
(b) einen hohlen länglichen Öffnungsadapter (10), der in die Öffnung in dem Kompressionsverteiler einfügbar ist und eine Ineingriffnahmeseite und eine Einfügungsseite aufweist, wobei ein Flansch (14) dazwischen und ein elastomeres Dichtungselement (16) in der Einfügungsseite angeordnet ist, wobei der hohle längliche Öffnungsadapter konfiguriert ist, um im Wesentlichen durch die Öffnung in die Fluidbahn wasserdicht eingefügt zu werden, sodass, wenn eingefügt,
(i) das entfernteste Ende der Einfügungsseite geeignet ist, um bündig mit oder ausgenommen unter der inneren Oberfläche des Kompressionsverteilers zu liegen,
(ii) der Flansch geeignet ist, um an der Öffnung zu sitzen, und
(iii) das elastomere Dichtungselement geeignet ist, um eine im Wesentlichen aseptische wasserdichte Dichtung innerhalb der Fluidbahn zu bilden, und
(c) eine Klammer (60), die im Stande ist, wenn der hohle längliche Öffnungsadapter in die Fluidbahn eingefügt wird, den Flansch und die Öffnung fest in Eingriff zu nehmen.

3. Tangentialströmungs-Filtrations-Kit gemäß Anspruch 2, bei dem die TFF-Kassette und der hohle längliche Öffnungsadapter vorsterilisiert sind.

4. Tangentialströmungs-Filtrations-Kit gemäß Anspruch 2, bei dem der hohle Öffnungsadapter strukturell konfiguriert ist, um das interne Volumen der Öffnung um bis zu 85% zu verringern.

5. Tangentialströmungs-Filtrationsverfahren, mit folgenden Schritten:
(a) Bereitstellen eines Filterhalters, wobei der Filterhalter ein Paar von Kompressionsverteilern (50a, 50b) aufweist, die angeordnet sind, um eine TFF-Kassette dazwischen funktionsmäßig in Eingriff zu nehmen, wobei einer der Kompressionsverteiler eine äußere Oberfläche, eine innere Oberfläche und eine Öffnung aufweist, die zu einer Fluidbahn von der äußeren Oberfläche zu der inneren Oberfläche führt;
(b) Bereitstellen einer besagten TFF-Kassette (80), wobei die TFF-Kassette ein Gehäuse umfasst, das eine einzelne Filterplatte umschließt, wobei die Filterplatte eine Membran umfasst, die in einem im Wesentlichen planaren Rahmen angeordnet ist;
(c) Bereitstellen eines hohlen länglichen Öffnungsadapters (10), wobei der hohle längliche Öffnungsadapter eine Ineingriffsnahmeseite und eine Einfügungsseite mit einem Flansch (14), der dazwischen angeordnet ist, und einem elastomeren Dichtungselement (16), das in der Einfügungsseite angeordnet ist, aufweist;
(d) Ineingriffnehmen der TFF-Kassette zwischen dem Paar von Kompressionsverteilem;
(e) Einfügen des hohlen länglichen Öffnungsadapters in die Fluidbahn, sodass (i) das entfernteste Ende der Einfügungsseite bündig mit oder ausgenommen unter der inneren Oberfläche des Kompressionsverteilers ist, (ii) der Flansch an der Öffnung sitzt und (iii) das elastomere Dichtungselement eine im Wesentlichen aseptische wasserdichte Dichtung in der Fluidbahn bildet;
(f) festes Ineingriffnehmen des Flansches und der Öffnung mit einer Klammer (60); und
(g) Drängen eines Probenfluids in die TFF-Kassette und durch den hohlen länglichen Öffnungsadapter.

6. Tangentialströmungs-Filtrationsverfahren gemäß Anspruch 5, bei dem die TFF-Kassette ein internes Fluid-Volumen von etwa 2 ml aufweist.

7. Tangentialströmungs-Filtrationsverfahren gemäß Anspruch 5, bei dem die Membran eine Ultrafiltrationsmembran ist, die eine nominale Molekulargewichtgrenze (NMWL) von ungefähr 1 bis ungefähr 1000 kD aufweist.

8. Tangentialströmungs-Filtrationsverfahren gemäß Anspruch 5, bei dem Proben-Fluid in die TFF-Kassette mit einer Strömungsrate in dem Bereich von 40 bis 150 ml/min und einem maximalen Transmembranendruck von 50 psi (3,45 bar) strömt.

## Revendications

1. Ensemble de filtration à écoulement tangentiel (TFF) utile pour une ultrafiltration en faible volume, comportant :
(a) un support de filtre comportant une paire de collecteurs pneumatiques (50a, 50b) disposés pour venir en prise fonctionnellement avec une cassette TFF (80) située entre ceux-ci, au moins un desdits collecteurs pneumatiques ayant une surface extérieure (57), une surface intérieure (58) et un orifice (54) s'étendant jusqu'à un trajet de fluide allant de ladite surface extérieure jusqu'à ladite surface intérieure,
(b) au moins une cassette TFF venant en prise de manière fonctionnelle entre lesdits collecteurs pneumatiques, la cassette TFF comportant une enceinte enfermant une plaque filtrante unique, ladite plaque filtrante unique comportant une membrane d'ultrafiltration disposée à l'intérieur d'un châssis sensiblement plan, et
(c) un adaptateur pour orifice allongé creux (10) ayant un côté de mise en prise et un côté d'insertion avec une bride (14) disposée entre ceux-ci et un élément d'étanchéité élastomère (16) disposé dans ledit côté d'insertion, ledit adaptateur pour orifice allongé creux étant inséré à travers ledit orifice dans ledit trajet de fluide de sorte que,
(i) l'extrémité la plus éloignée dudit côté d'insertion est au même niveau que ladite surface intérieure dudit collecteur pneumatique, ou est creusée sous celle-ci,
(ii) ladite bride est assise sur ledit orifice, et
(iii) ledit élément d'étanchéité élastomère forme un joint étanche à l'eau sensiblement aseptique à l'intérieur dudit trajet de fluide, et
(d) une clame (60) capable, lorsque ledit adaptateur pour orifice allongé creux est inséré dans ledit trajet de fluide, de venir en prise de manière fixe avec ladite bride et ledit orifice.

2. Kit de filtration à écoulement tangentiel configuré de manière personnalisée pour une utilisation avec un support de filtre préexistant pour permettre une filtration à écoulement tangentiel, dans lequel ledit support de filtre préexistant comporte une paire de collecteurs pneumatiques disposés pour venir en prise de manière fonctionnelle avec une cassette TFF située entre ceux-ci, au moins un desdits collecteurs pneumatiques ayant une surface extérieure, une surface intérieure, et un orifice s'étendant dans un trajet de fluide allant de ladite surface extérieure jusqu'à ladite surface intérieure, le kit de filtration à écoulement tangentiel contenant, enfermés dans un emballage commun :
(a) au moins une cassette TFF (80),
(b) un adaptateur pour orifice allongé creux, pouvant être inséré dans ledit orifice dans ledit collecteur pneumatique et ayant un côté de mise en prise et un côté d'insertion avec une bride (10) disposée entre ceux-ci et un élément d'étanchéité élastomère (14) disposé dans ledit côté d'insertion, l'adaptateur pour orifice allongé creux étant configuré pour une insertion sensiblement étanche à l'eau à travers ledit orifice dans ledit trajet de fluide de sorte que, une fois inséré,
(i) l'extrémité la plus éloignée dudit côté d'insertion est de manière adaptée destinée à être au même niveau que ladite surface intérieure dudit collecteur pneumatique, ou creusée sous celle-ci,
(ii) ladite bride est de manière adaptée destinée à être assise sur ledit orifice, et
(iii) ledit élément d'étanchéité élastomère est adapté pour former un joint étanche à l'eau sensiblement aseptique à l'intérieur dudit trajet de fluide, et
(c) une clame (60) capable, lorsque ledit adaptateur pour orifice allongé creux est inséré dans ledit trajet de fluide, de venir en prise de manière fixe avec ladite bride et ledit orifice.

3. Kit de filtration à écoulement tangentiel selon la revendication 2, dans lequel la cassette TFF et l'adaptateur pour orifice allongé creux sont pré-stérilisés.

4. Kit de filtration à écoulement tangentiel selon la revendication 2, dans lequel l'adaptateur pour orifice creux est configuré de manière structurelle pour réduire jusqu'à 85 % du volume interne dudit orifice.

5. Procédé de filtration à écoulement tangentiel comportant les étapes consistant à :
(a) fournir un support de filtre, ledit support de filtre ayant une paire de collecteurs pneumatiques (50a, 50b) disposés pour venir en prise de manière fonctionnelle avec une cassette TFF située entre ceux-ci, un desdits collecteurs pneumatiques ayant une surface extérieure, une surface intérieure et un orifice s'étendant dans un trajet de fluide allant de ladite surface extérieure jusqu'à ladite surface intérieure,
(b) fournir une cassette TFF (80), la cassette TFF comportant une enceinte renfermant une plaque filtrante unique, ladite plaque filtrante comportant une membrane disposée à l'intérieur d'un châssis sensiblement plan,
(c) fournir un adaptateur pour orifice allongé creux (10), l'adaptateur pour orifice allongé creux ayant un côté de mise en prise et un côté d'insertion avec une bride (14) disposée entre ceux-ci et un élément d'étanchéité élastomère (16) disposé dans ledit côté d'insertion,
(d) mettre en prise ladite cassette TFF entre ladite paire de collecteurs pneumatiques,
(e) insérer ledit adaptateur pour orifice allongé creux dans ledit trajet de fluide de sorte que (i) l'extrémité la plus éloignée dudit côté d'insertion est au même niveau que ladite surface intérieure dudit collecteur pneumatique, ou creusée sous celle-ci, (ii) ladite bride est assise sur ledit orifice, et (iii) ledit élément d'étanchéité élastomère forme un joint étanche à l'eau sensiblement aseptique à l'intérieur dudit trajet de fluide,
(f) mettre en prise de manière fixe ladite bride et ledit orifice à l'aide d'une clame (60), et
(g) introduire de manière forcée un fluide échantillon dans ladite cassette TFF et à travers ledit adaptateur pour orifice allongé creux.

6. Procédé de filtration à écoulement tangentiel selon la revendication 5, dans lequel ladite cassette TFF a un volume de fluide interne d'environ 2 ml.

7. Procédé de filtration à écoulement tangentiel selon la revendication 5, dans lequel ladite membrane est une membrane d'ultrafiltration ayant une limite de poids moléculaire nominale (NMWL) d'approximativement 1 à approximativement 1000 kD.

8. Procédé de filtration à écoulement tangentiel selon la revendication 5, dans lequel le fluide échantillon s'écoule dans ladite cassette TFF à un débit dans la plage de 40 à 150 ml/min et une pression transmembranaire maximum de 50 psi (3,45 bars).
